# EUROPÄISCHE PATENTANMELDUNG

(11) **EP 1 048 888 A2**
(43) Veröffentlichungstag der Anmeldung: **02.11.2000**
(21) Anmeldenummer: 00810259.2
(22) Anmeldetag: 27.03.2000
(51) Int. Cl.: F16L 59/02, F16L 55/033

(54) **Isolierelement für Rohre**

(30) Priorität: 23.04.1999 CH 76399
(71) Anmelder: Aeroflex International Co., Ltd., Teparak Muang, Samutprakarn 10270 (TH)
(72) Erfinder: Vitoorapakorn, Pawat, Samutprakarn 10270 (TH)
(74) Vertreter: Rottmann, Maximilian R.

(57) **Zusammenfassung**

Ein Isolierelement für Rohre zur Bildung eines Aufhängungs- oder Abstützungsabschnitts weist einen formstabilen (1) und zwei elastische Abschnitte (2, 3) auf. Das Isolierelement ist einstückig ausgebildet und mit einem Schlitz (10) versehen. Auf der Aussen- sowie auf der Innenseite des Isolierelements ist je ein umlaufendes Trägerband (5, 8) mit guten vibrationsdämpfenden Eigenschaften vorgesehen. Das äussere Trägerband (5) ist mit einer sich über den Schlitz (10) hinaus erstreckenden Zunge (6) versehen, welche auf der Innenseite mit einer selbstklebenden Oberfläche zum Fixieren auf der dem Schlitz (10 gegenüberliegenden Seite versehen ist.

## Beschreibung

Die Erfindung betrifft ein Isolierelement für Rohre nach dem Oberbegriff des Anspruchs 1.

Die Problematik beim Aufhängen oder Abstützen von thermisch isolierten Rohren besteht darin, dass die herkömmlichen Isolationen keine genügende Festigkeit aufweisen, damit Rohrschellen zum Aufhängen oder Abstützen des Rohres daran befestigt werden können. Daher werden die Rohrschellen im allgemeinen direkt am Rohr selber befestigt. Dies wiederum bedingt, dass die Rohrschellen nachträglich isoliert werden müssen, damit keine unerwünschten Kälte- bzw. Wärmebrücken entstehen. Es versteht sich, dass das nachträgliche Isolieren von Rohrschellen einen erheblichen Aufwand mit sich bringt.

Aus der EP 0 503 566 ist ein Rohrisolierstück für eine Aufhängung oder Abstützung einer kälteisolierten Rohrleitung bekannt. Dieses Rohrisolierstück besteht im wesentlichen aus zwei Hohlzylinderhalbschalen, welche mit einem eingesetzten Ringsegment aus druckfestem, thermisch isolierenden Hartschaum versehen sind. Dieses Ringelement erstreckt sich über ein bis drei Viertel des Aussenumfangs der zugehörigen Hohlzylinderhalbschale. Die Aussenhaut des Rohrisolierstücks wird durch ein Metallblech gebildet, welches gleichzeitig die Rohrschelle bildet.

Die Aufgabe der vorliegenden Erfindung besteht nun darin, ein gemäss dem Oberbegriff des Anspruch 1 ausgebildetes Isolierelement derart zu verbessern, dass es einfach in der Handhabung ist.

Diese Aufgabe wird durch die im Kennzeichen des Anspruchs 1 angeführten Merkmale gelöst.

Die geschilderte Ausbildung des Isolierelements lässt sich schnell und einfach an einem Rohr anbringen. Dazu wird der Schlitz des Isolierelements bis auf den Aussendurchmesser des zu isolierenden Rohres aufgeweitet, so dass das Isolierelement über das Rohr geschoben werden kann. Das Aufweiten des Isolierelements ist durch den/die elastische(n) Abschnitt(e) ohne weiteres möglich. Danach wird der sich über den Schlitz hinaus erstreckende Teil des Trägerbandes mittels der selbstklebenden Oberfläche fixiert. Indem der Schlitz mittels des sich über den Schlitz hinaus erstreckenden Teils des Trägerbandes auf der Aussenseite überdeckt wird, kann sichergestellt werden, dass keine Feuchtigkeit durch den Schlitz eindringen kann.

Bevorzugte Ausführungsformen des Erfindungsgegenstands sind in den abhängigen Ansprüchen 2 bis 10 aufgeführt.

Nachfolgend wird ein Ausführungsbeispiel der Erfindung anhand einer Zeichnung näher erläutert. In dieser Zeichnung zeigt:
Fig. 1 das Isolierelement in der Grundform;
Fig. 2 das an einem Rohr fixierte Isolierelement.

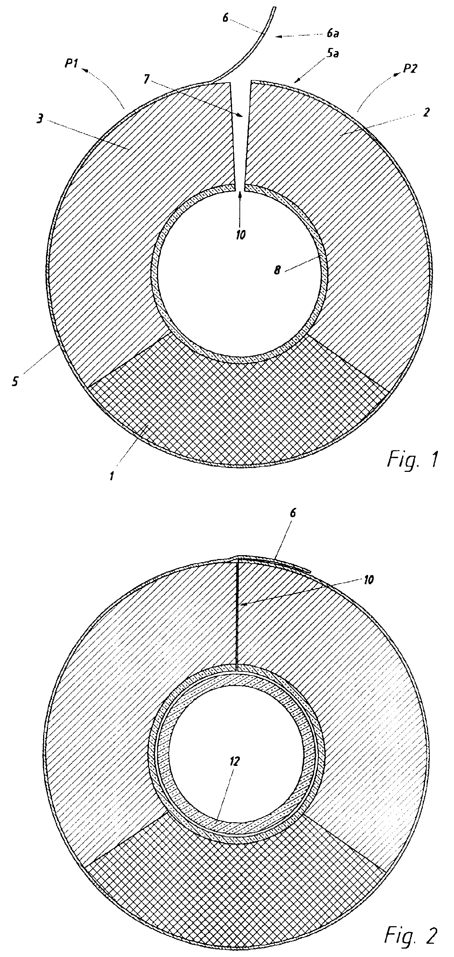

Das in der Fig. 1 dargestellte Isolierelement ist einstückig ausgebildet und besitzt eine, im Querschnitt gesehen, im wesentlichen kreisringförmig ausgebildete Grundform. Unter einstückig ist im vorliegenden Fall zu verstehen, dass die einzelnen Bestandteile des Isolierelements zu einer Einheit zusammengefügt sind, und nicht, dass das Isolierelement nur aus einem einzelnen Element gefertigt ist. Das Isolierelement ist mit einem Schlitz 10 versehen, welcher aufgeweitet werden kann, so dass das Isolierelement auf ein Rohr aufschiebbar ist. Das Isolierelement weist einen formstabilen Abschnitt 1 sowie zwei elastische Abschnitte 2, 3 auf, wobei der formstabile Abschnitt 1 auf der dem Schlitz 10 diametral gegenüberliegenden Seite des Isolierelements angeordnet ist. An alle drei Abschnitte 1, 2, 3 schliesst sich auf der Innenseite ein vibrationsdämpfendes, kompressionselastisches Trägerband 8 an. Auf der Aussenseite ist ein umlaufendes Trägerband 5 vorgesehen, das mit einer sich über den Schlitz 10 hinaus erstreckenden Zunge 6 versehen ist. Alle drei Abschnitte 1, 2, 3 besitzen eine kreisringsegmentförmig ausgebildete Grundform und weisen gute thermische Isolationseigenschaften auf. Die sich über den Schlitz 10 hinaus erstreckenden Zunge 6 ist auf der Innenseite 6a mit einer selbstklebenden Oberfläche versehen, wodurch sie auf der gegenüberliegenden Seite des Schlitzes im Bereich 5a an der Aussenseite des Trägerbandes 5 festgeklebt werden kann, so dass der Schlitz 10 von der Zunge 6 überdeckt wird.

Die an den Schlitz 10 angrenzende Stirnseite 7 des rechten, elastischen Abschnitts 2 ist ebenfalls mit einer selbstklebenden Oberfläche versehen. Es versteht sich, dass die selbstklebenden Oberflächen im Normalfall mit je einem Abdeckband versehen sind, welche erst unmittelbar vor dem definitiven Fixieren des Isolierelements am Rohr entfernt werden. Weder die Abdeckbänder noch die selbstklebenden Oberflächen sind jedoch zugunsten einer übersichtlichen Darstellung im vorliegenden Fall eingezeichnet.

Sowohl das äussere wie auch das innere Trägerband 5, 8 sind vorzugsweise aus einem synthetischen Kautschuk gefertigt, wobei das äussere Trägerband 5 gewisse Zugkräfte übertragen können muss. Damit die Trägerbänder 5, 8 gute vibrationsdämpfende Eigenschaften aufweisen, werden diese vorzugsweise aus einem aufgeschäumten Kautschuk mit einer Dicke zwischen ca. 1 und 5 mm gefertigt.

Der sich vorzugsweise über 36° bis 180° des Kreisumfangs erstreckende, formstabile Formkörper 1 besteht aus einem Hartschaum, welcher sehr leicht und dabei gleichzeitig formstabil ist. Dieser Formkörper 1 ist dazu vorgesehen, die Kräfte beim Abstützen oder Aufhängen eines Rohres auf eine aussen am Isolierelement anzubringenden Rohrschelle zu übertragen. Vorzugsweise weisen sowohl die Formkörper 1, 2, 3 wie auch die Trägerbänder 5, 8 eine geschlossene Zellstruktur auf, so dass sie nicht hygroskopisch wirken und daher keine Feuchtigkeit aufnehmen.

Um das Isolierelement aus der in Fig. 1 gezeigten Ausgangsstellung auf ein Rohr 12 aufschieben zu können, muss dessen Schlitz 10 auf den Aussendurchmesser des entsprechenden Rohres 12 aufgeweitet werden. Die ist durch die elastische Ausbildung der beiden an den Schlitz 10 angrenzenden Abschnitte 2, 3 ohne weiteres möglich. Dazu wird das Isolierelement an den beiden elastischen Abschnitten 2, 3 manuell in Richtung der Pfeile P1, P2 auseinandergezogen. Nachdem das Isolierelement auf das Rohr 12 aufgeschoben wurde, werden die Abdeckbänder von den selbstklebenden Oberflächen an der Stirnseite des elastischen Abschnitts 2 und an der Innenseite der Zunge 6 entfernt und die beiden elastischen Abschnitte 2, 3 soweit zusammengedrückt, bis sich deren Stirnseiten berühren. In diesem Zustand wird die Zunge 6 des Trägerbandes 5 auf der gegenüberliegenden Seite des Schlitzes 10 im Bereich 5a an der Aussenseite des Trägerbandes 5 festgeklebt. Dieser Zustand ist aus der Fig. 2 ersichtlich. Da der Schlitz 10 durch die Zunge 6 des Trägerbandes 5 nunmehr abgedeckt ist, wird sichergestellt, dass durch den Schlitz 10 keine Feuchtigkeit von aussen eindringen kann.

Zur Abstützung oder zum Aufhängen des Rohres 12 mittels des Isolierelements wird üblicherweise eine aus Metall bestehende Rohrschelle verwendet, welche in bekannter Weise aussen am Isolierelement angebracht wird. Durch das äussere und das innere Trägerband wird dabei sichergestellt, dass die Rohrschelle gegenüber dem Rohr weitgehend gegen Vibrationen gedämpft ist. Da derartige Rohrschellen bekannt sind, wurde auf eine Darstellung verzichtet.

Zur Fertigung der beiden Trägerbänder 5, 8 und der flexiblen Abschnitte 2, 3 kommen nebst synthetischem Kautschuk auch Thermoplaste in Frage, wobei grundsätzlich sowohl organische wie auch anorganische Materialien verwendet werden können.

Das gezeigte Ausführungsbeispiel eines Isolierelements kann sehr schnell und einfach an einem Rohr angebracht werden. Nebst der einfachen Handhabung hat das Isolierelement den weiteren Vorteil, dass es bestimmte Toleranzen in bezug auf allfällige Abweichungen des Rohraussendurchmessers ausgleichen kann.

## Patentansprüche

1. Isolierelement für Rohre zur Bildung eines Aufhängungs- oder Abstützungsabschnitts, welches im Querschnitt gesehen im wesentlichen kreisringförmig ausgebildet ist und mit zumindest einem formstabilen Abschnitt (1) zur Aufnahme der Aufhängungs- oder Abstützungskräfte und zumindest einem elastischen Abschnitt (2, 3) versehen ist, **dadurch gekennzeichnet**, dass das Isolierelement einstückig ausgebildet und mit einem Schlitz (10) versehen ist, wobei das Isolierelement auf der Aussenseite ein umlaufendes Trägerband (5) aufweist, welches sich über den Schlitz (10) hinaus erstreckt, und wobei das Trägerband (5) zumindest teilweise mit einer selbstklebenden Oberfläche zum Fixieren des sich über den Schlitz hinaus erstreckenden Teils (6) des Trägerbandes (5) versehen ist.

2. Isolierelement nach Anspruch 1, dadurch gekennzeichnet, dass der sich über den Schlitz hinaus erstreckende Teil (6) des Trägerbandes (5) auf der Innenseite mit einer selbstklebenden Oberfläche versehen ist.

3. Isolierelement nach Anspruch 1 oder 2, dadurch gekennzeichnet, dass zumindest eine Stirnseite (7) des an den Schlitz (10) angrenzenden Abschnitts (2) des Isolierelements mit einer selbstklebenden Oberfläche versehen ist.

4. Isolierelement nach einem der vorhergehenden Ansprüche, dadurch gekennzeichnet, dass das Isolierelement auf der Innenseite mit einem vibrationsdämpfenden, vorzugsweise kompressionselastischen Trägerband (8) versehen ist.

5. Isolierelement nach einem der vorhergehenden Ansprüche, dadurch gekennzeichnet, dass das aussen umlaufende Trägerband (5) zugfest ausgebildet ist und vibrationsdämpfende Eigenschaften aufweist.

6. Isolierelement nach einem der vorhergehenden Ansprüche, dadurch gekennzeichnet, dass der formstabile Abschnitt (1) auf der dem Schlitz (10) diametral gegenüberliegenden Seite des Isolierelements angeordnet ist, und dass sowohl der formstabile Abschnitt (1) wie auch der/die elastische(n) Abschnitt(e) (2, 3) kreisringsegmentförmig ausgebildet sind.

7. Isolierelement nach einem der vorhergehenden Ansprüche, dadurch gekennzeichnet, dass ein formstabiler Abschnitt (1) und zwei elastische Abschnitte (2, 3) vorgesehen sind,

8. Isolierelement nach einem der vorhergehenden Ansprüche, dadurch gekennzeichnet, dass sich der formstabile Abschnitt (1) über 36° bis 180° des Kreisumfangs erstreckt.

9. Isolierelement nach einem der vorhergehenden Ansprüche, dadurch gekennzeichnet, dass zumindest das äussere Trägerband (5) eine geschlossene Zellstruktur aufweist.

10. Isolierelement nach einem der vorhergehenden Ansprüche, dadurch gekennzeichnet, dass zumindest der/die elastische(n) Abschnitt(e) (2, 3) und das innere Trägerband (8) aus einem synthetischem Kautschuk oder einem Thermoplasten gefertigt sind.
